(19) **Europäisches Patentamt / European Patent Office / Office européen des brevets**

(11) **EP 2 707 781 B1**

(12) **FASCICULE DE BREVET EUROPEEN**

(45) Date de publication et mention
de la délivrance du brevet:
**03.02.2016 Bulletin 2016/05**

(21) Numéro de dépôt: **12723418.5**

(22) Date de dépôt: **11.05.2012**

(51) Int Cl.:
*G05B 13/02* (2006.01)   *G05B 15/02* (2006.01)

(86) Numéro de dépôt international:
**PCT/EP2012/058837**

(87) Numéro de publication internationale:
**WO 2012/152939 (15.11.2012 Gazette 2012/46)**

(54) **PROCEDE DE PREVISION DE LA CONSOMMATION ENERGETIQUE D'UN BATIMENT**

VERFAHREN ZUR VORHERSAGE DES ENERGIEVERBRAUCHS EINES GEBÄUDES

METHOD OF PREDICTING THE ENERGY CONSUMPTION OF A BUILDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2011 FR 1154057**

(43) Date de publication de la demande:
**19.03.2014 Bulletin 2014/12**

(73) Titulaire: **Commissariat à l'Énergie Atomique et aux Énergies Alternatives 75015 Paris (FR)**

(72) Inventeur: **LE PIVERT, Xavier F-73100 Tresserve (FR)**

(74) Mandataire: **Novaimo Bâtiment Europa 2 310 avenue Marie Curie Archamps Technopole 74166 Saint-Julien-en-Genevois Cedex (FR)**

(56) Documents cités:
**WO-A1-2007/061357     GB-A- 2 212 949 US-A1- 2009 187 445**

• **DOMBAYCI ET AL: "The prediction of heating energy consumption in a model house by using artificial neural networks in Denizli-Turkey", ADVANCES IN ENGINEERING SOFTWARE, ELSEVIER SCIENCE, OXFORD, GB, vol. 41, no. 2, 1 février 2010 (2010-02-01), pages 141-147, XP026765744, ISSN: 0965-9978, DOI: 10.1016/J.ADVENGSOFT.2009.09.012 [extrait le 2009-10-25]**
• **NETO A H ET AL: "Comparison between detailed model simulation and artificial neural network for forecasting building energy consumption", ENERGY AND BUILDINGS, LAUSANNE, CH, vol. 40, no. 12, 1 janvier 2008 (2008-01-01), pages 2169-2176, XP025466611, ISSN: 0378-7788, DOI: 10.1016/J.ENBUILD.2008.06.013 [extrait le 2008-07-02]**

**Description**

L'invention concerne un procédé de gestion thermique d'un bâtiment ainsi qu'un système thermique mettant en oeuvre un tel procédé. Elle porte aussi sur un support comprenant un logiciel mettant en oeuvre un tel procédé. Enfin, elle concerne aussi un bâtiment équipé d'un tel système thermique.

Il est utile de pouvoir prévoir la consommation énergétique d'un bâtiment pour pouvoir anticiper le chauffage ou la climatisation du bâtiment et atteindre à tout moment le confort souhaité par ses occupants. Or les phénomènes thermiques qui caractérisent un bâtiment sont complexes et difficiles à appréhender.

Pour cela, une première solution de l'état de la technique repose sur une analyse de valeurs mesurées et de données mémorisées sur une longue période, d'une année par exemple. Notamment, les valeurs de consommation d'énergie et de température intérieure du bâtiment sont mémorisées en fonction du temps, ainsi que les données météorologiques correspondantes comme la température extérieure et l'ensoleillement. Un croisement à partir d'un traitement numérique par une méthode de type réseau de neurones permet de déterminer un modèle mathématique représentatif de ces données du passé, qui est ensuite utilisé pour réaliser des prévisions futures. Cette méthode, basée sur de l'intelligence artificielle, nécessite un grand nombre de données pour atteindre un résultat acceptable, ce qui est long à mettre au point et nécessite des calculs complexes. D'autre part, comme elle ne repose pas sur une approche physique des phénomènes, elle reste limitée et ne peut pas atteindre une précision suffisante dans toutes les situations.

Une seconde solution de l'état de la technique repose sur une modélisation des phénomènes physiques à partir de fortes simplifications pour ne pas nécessiter des moyens de calcul trop importants. Dans cette modélisation, les échanges thermiques avec l'extérieur, de type rayonnement ou convection par exemple, sont négligés.

Dans tous les cas, les résultats restent insatisfaisants et il existe un besoin d'une solution améliorée de prévision de la consommation énergétique d'un bâtiment.

Le document WO 2007/061357 décrit un procédé de prévision de la consommation énergétique d'un bâtiment.

A cet effet, l'invention repose sur un procédé de prévision de la consommation énergétique d'un bâtiment, caractérisé en ce qu'il comprend une étape de prise en compte des échanges thermiques de rayonnement solaire reçu et/ou de convection et/ou de conduction thermique entre le bâtiment et l'environnement extérieur à partir d'un modèle physique mis en oeuvre par un calculateur, et en ce qu'il comprend une étape d'apprentissage pour en déduire la valeur des paramètres du modèle physique à partir de mesures effectuées au niveau du bâtiment dans le passé.

Plus précisément, l'invention porte sur un procédé de prévision de la consommation énergétique d'un bâtiment, caractérisé en ce qu'il comprend une étape de prise en compte du chauffage et refroidissement du bâtiment par un dispositif de chauffage et/ou climatisation, des apports solaires passifs, des apports par les gains internes comme le chauffage par les personnes et les appareils ménagers, des pertes thermiques comme par convection et/ou conduction thermique entre le bâtiment et l'environnement extérieur et en ce qu'il comprend une étape d'apprentissage pour en déduire la valeur des paramètres du modèle physique à partir de mesures effectuées au niveau du bâtiment dans le passé, comprenant :

- la détermination d'au moins un paramètre du modèle physique relatif aux gains internes et/ou aux pertes thermiques à partir de mesures du passé lors de périodes de faibles ensoleillements ;
- la détermination d'au moins un paramètre du modèle physique relatif aux apports soleils passifs à partir de mesures du passé lors de périodes ensoleillées.

L'invention porte aussi sur un support informatique comprenant un programme informatique mettant en oeuvre les étapes du procédé de prévision de la consommation énergétique d'un bâtiment tel que décrit précédemment.

L'invention porte aussi sur un système de prévision de la consommation énergétique d'un bâtiment, caractérisé en ce qu'il comprend une unité de contrôle qui met en oeuvre le procédé de prévision de la consommation énergétique du bâtiment tel que décrit précédemment.

Le système de prévision de la consommation énergétique d'un bâtiment peut comprendre un dispositif de chauffage et/ou climatisation et l'unité de contrôle peut mettre en oeuvre la régulation de la température intérieure du bâtiment en actionnant le dispositif de chauffage et/ou climatisation, en fonction d'une température de consigne souhaitée.

L'invention porte aussi sur un bâtiment caractérisé en ce qu'il comprend un système de prévision de la consommation énergétique d'un bâtiment mettant en oeuvre le procédé de prévision de la consommation énergétique d'un bâtiment tel que décrit précédemment.

L'invention est plus précisément définie par les revendications.

Ces objets, caractéristiques et avantages de la présente invention seront exposés en détail dans la description suivante d'un mode d'exécution particulier fait à titre non-limitatif en relation avec l'unique figure jointe qui illustre schématiquement un bâtiment et les différents phénomènes énergétiques pris en compte par le procédé de l'invention.

L'invention repose sur une meilleure prise en compte des phénomènes thermiques externes à un bâtiment, comme le rayonnement et/ou la convection et/ou la conduction. Notamment, elle permet de mieux tenir compte des influences de certains phénomènes météorologiques comme le vent et les apports solaires passifs sur un bâtiment. Elle est basée sur un compromis permettant de tenir compte de phénomènes physiques tout en conservant une simplicité compatible avec un traitement relativement simple par un calculateur.

Selon un mode de réalisation de l'invention, le bilan thermique au sein d'un bâtiment s'écrit de la manière suivante:

$$P_c = PT + PV - (P_{asp} + P_i) + S$$

où :

$P_c$ est la puissance nécessaire pour le chauffage ou refroidissement du bâtiment,

PT représente la puissance perdue par les défauts du bâtiment, comme les parois non isolées qui entraînent des transmissions de chaleur vers l'extérieur ou inversement,

PV représente la puissance perdue par la ventilation,

$P_{asp}$ représente la puissance apportée par les apports solaires passifs,

$P_i$ représente la puissance apportée par les gains internes, comme le chauffage par le corps humain des personnes présentes, par les appareils ménagers, etc.,

S représente le flux de chaleur accumulé dans le bâtiment.

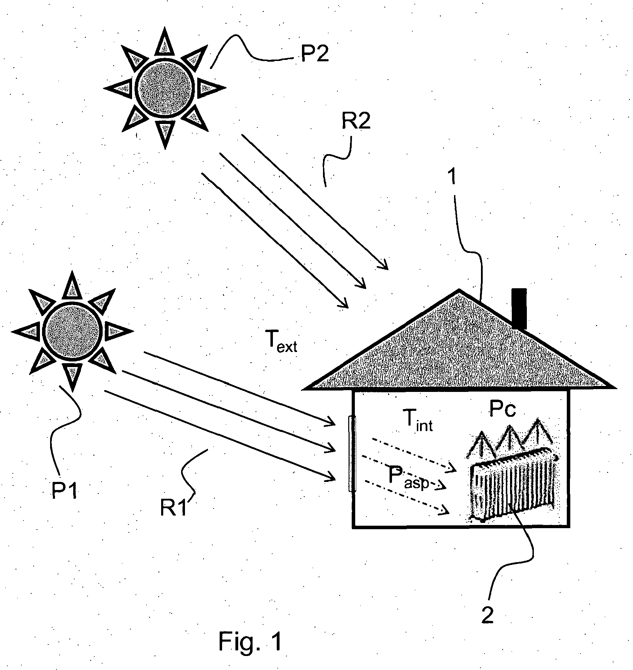

La puissance apportée par les apports solaires passifs, qui provient principalement du rayonnement solaire pénétrant un bâtiment, devient de moins en moins négligeable au fur et à mesure que l'isolation des bâtiments augmente. Comme cela apparaît sur la figure 1, ces apports dépendent de la position du soleil, et donc de l'heure et des saisons, puisque ce rayonnement atteint les différentes surfaces du bâtiment selon des angles différents. A titre d'exemple, le rayonnement R1 du soleil en position P1 représente la situation hivernale à une certaine heure. En été, le rayonnement R2 du soleil diffère fortement à la même heure en ce que sa position P2 est beaucoup plus haute. Il apparaît alors que le rayonnement solaire reçu par le bâtiment 1 est bien différent.

En faisant un bilan énergétique sur une période d'une journée, l'équation précédente nous permet d'obtenir un procédé de prévision de consommation énergétique d'un bâtiment qui considère l'équation (1) suivante :

$$\int_{journée} Pc + \int_{journée} P_{asp} + \int_{journée} P_i = \int_{journée} (PT + PV) \qquad (1)$$

L'hypothèse est faite que sur la période choisie, l'énergie thermique du bâtiment liée à l'inertie thermique est nulle, soit $\int S = 0$, en considérant que la température moyenne du bâtiment est la même en début et fin de période. Si ce n'est pas le cas on peut en variante tenir compte de la chaleur emmagasinée ou relâchée par le bâtiment (inertie thermique). Pour calculer les apports solaires passifs, il est considéré que le bâtiment est un ensemble de plusieurs surfaces réceptrices, pour lesquelles un coefficient $A_{req}$ appelé « aire réceptrice équivalente » est défini, qui représente l'aire d'un corps noir représentant le même apport solaire passif que la surface réceptrice considérée. Avec cette définition, on obtient la formule suivante pour un bâtiment de cinq surfaces réceptrices :

$$\int_{journée} P_{asp} = \sum_{i=1à5} \int_{journée} A_{req,i} . G_i(t) \qquad (2)$$

où $G_i(t)$ représente l'irradiance (en $W.m^{-2}$) reçue par la surface i à l'instant t. Elle est calculée à partir de données météorologiques et de calculs géométriques prenant en compte la position du soleil dans le ciel.

Dans le mode de réalisation, le modèle physique du bâtiment considère une séparation du bâtiment en cinq surfaces réceptrices. En variante, tout autre nombre de surfaces peut être considéré en fonction de l'architecture du bâtiment, avantageusement entre 1 et 10, de préférence entre 3 et 6, de sorte d'atteindre un bon compromis entre la complexité des calculs et la précision du modèle.

Le procédé de prévision de consommation énergétique d'un bâtiment comprend une étape d'apprentissage, qui permet d'estimer les différents paramètres $A_{req}$, comme cela sera détaillé par la suite.

Les pertes thermiques du bâtiment sur une journée sont estimées par l'équation suivante :

$$\int_{journée} \text{Pertes\_thermiques} = \int_{journée} GV.(T_{int} - T_{ext}) = GV \int_{journée} .(T_{int} - T_{ext}) \qquad (3)$$

où GV représente un coefficient de déperdition thermique (en W/°C), qui permet de faire dépendre les pertes thermiques de la différence de température intérieure $T_{int}$ et extérieure $T_{ext}$ au bâtiment.

Les apports internes représentent les apports de chaleur des dispositifs et des personnes à l'intérieur du bâtiment. Ils sont irréguliers et dépendent de l'activité au sein du bâtiment. Il est considéré pour simplifier qu'ils sont répétitifs, et prennent une valeur moyenne constante pour deux périodes distinctes, les jours de semaine et de week-end, pour lesquels le rythme d'activité dans le bâtiment diffère. En variante, ces apports de chaleur peuvent aussi dépendre des saisons. Les valeurs moyennes retenues sont finalement des moyennes mesurées sur ces différentes périodes.

En variante, plusieurs profils différents peuvent être prédéfinis pour ces apports internes, dépendant de l'occupation d'un bâtiment, puisque la seule présence de personnes entraîne un apport de chaleur, et/ou de l'activité au sein d'un bâtiment, comme l'utilisation ou non d'un four, plus généralement de tout appareil susceptible d'apporter de la chaleur.

Les puissances de chauffage et de climatisation sont calculées à partir de la connaissance des différents appareils de chauffage et de climatisation du bâtiment.

Un procédé d'apprentissage permet de calculer les différents paramètres utilisés dans les équations précédentes. L'équation (1) s'écrit de la manière suivante, en intégrant les équations (2) et (3) mentionnées précédemment :

$$\int_{journée} P_c(t) + \int_{journée} P_i(t) + \int_{journée} \sum_{i=1}^{5} A_{req,i}.G_i(t) = \int_{journée} GV.\left(T_{int}(t) - T_{ext}(t)\right) \qquad (4)$$

L'apprentissage va permettre de calculer les paramètres à partir de valeurs passées connues au niveau du bâtiment, en dissociant les périodes de faible ensoleillement et les périodes ensoleillées. Ces périodes sont définies par exemple par comparaison entre l'ensoleillement mesuré et l'ensoleillement théorique par temps clair.

D'abord, pour les périodes de faible ensoleillement, les apports solaires passifs sont négligés et l'équation (4) peut se simplifier de la manière suivante :

$$\int_{journée} P_c(t) + \int_{journée} P_i(t) = \int_{journée} GV.(T_{int} - T_{ext}) \qquad (5)$$

L'hypothèse est faite que les apports internes d'une journée peuvent prendre deux valeurs constantes différentes, la première pour les jours de semaine et la seconde pour les jours de week-end. Les inconnues de l'équation (5) sont donc GV, $\int_{journée1} P_i$ ou $\int_{journée2} P_i$.

En choisissant quelques jours non ensoleillés, pour lesquels les autres valeurs $P_c$, $T_{int}$, $T_{ext}$ de l'équation (5) sont mesurées et connues, on peut calculer, ou en tous cas estimer, les trois inconnues ci-dessus.

En variante, d'autres modèles peuvent être employés, et par exemple tout autre type de profils prédéfinis pour les apports internes. On remarque alors que l'étape d'apprentissage peut comprendre un premier apprentissage des paramètres concernant les pertes thermiques lors de périodes de faible ensoleillement, pour lesquelles les apports solaires passifs sont négligeables, et de faible occupation, pour lesquelles les gains (ou apports) internes sont négligeables. Ensuite, les paramètres relatifs aux apports internes peuvent faire l'objet d'un apprentissage lors de périodes de faible ensoleillement, pour lesquelles les apports solaires passifs sont négligeables, et d'occupation du bâtiment, pour lesquelles les gains (ou apports) internes ne sont plus négligeables.

Lors de l'utilisation ultérieure du modèle physique, pour calculer par exemple le chauffage nécessaire pour atteindre une certaine consigne de température, ou pour calculer une future température au sein du bâtiment pour un certain chauffage, comme cela sera détaillé par la suite, le profil pour prendre en compte les apports internes sera choisi parmi les profils prédéfinis en fonction de l'occupation du bâtiment et/ou de l'activité au sein du bâtiment. Ce choix peut être tout ou partie automatisé, par exemple sur la base de capteurs de présence, de détecteurs de mesure de l'activité, pour la détection de l'utilisation d'un four par exemple.

Ensuite, on considère quelques jours ensoleillées, pour lesquels l'équation (4) s'applique. Les inconnues de cette équation sont alors les paramètres $A_{req,i}$. Les valeurs $G_i(t)$ sont calculées à partir de données météorologiques mesurées et de calculs géométriques incluant la position du soleil dans le ciel.

Avec quelques jours ensoleillés, nous obtenons suffisamment d'équations (4) (au moins n) pour trouver l'ensemble des inconnues $A_{req,i}$.

En remarque, ces paramètres ainsi définis par apprentissage peuvent être affinés avec des mesures supplémentaires dans le temps.

Lorsque ces paramètres de l'équation (4) sont connus par apprentissage, il est possible de considérer l'équation (6) suivante, qui caractérise les fluctuations de température au sein du bâtiment :

$$C.\frac{dT_{int}}{dt} = GV(T_{ext}(t) - T_{int}(t)) + P_c(t) + P_i(t) + \sum_{i=1}^{5} A_{req,i}.G_i(t) \qquad (6)$$

où C représente la capacité thermique du bâtiment.

Pour exploiter cette équation, une nouvelle étape d'apprentissage pour estimer la valeur du paramètre C est mise en oeuvre.

Pour une journée nuageuse, les apports solaires passifs sont négligeables, et à chaque instant on peut écrire :

$$\hat{C}(t) = \frac{GV(T_{ext}(t)-T_{int}(t))+P_c(t)+ \int_{p\acute{e}riode} Pi \, / \, p\acute{e}riode}{\frac{dT_{int}}{dt}} \qquad (7)$$

On fait alors l'approximation que $P_i(t) = (\int_{journ\acute{e}e} P_i) /24h$, c'est-à-dire que l'on néglige les fluctuations d'apport interne sur la journée et ou considère leur valeur moyenne pour résoudre l'équation (7) ci-dessus. En variante, il est aussi possible de déterminer des profils moyens des apports internes $P_i(t)$ sur des périodes plus petites que la journée, et de mettre à jour régulièrement cette mesure pour tenir compte des variations saisonnières ou d'autres variations.

Toutes les autres grandeurs de l'équation (7) sont soit mesurées, soit connues des apprentissages précédents. C est finalement obtenu par la valeur moyenne sur la journée des $\hat{C}(t)$ calculés précédemment par l'équation (7).

$$C = moyenne_{journ\acute{e}e}(\hat{C}(t))$$

En remarque, pour une journée ensoleillée, des calculs similaires peuvent être effectués mais en tenant compte des apports solaires passifs.

Les calculs précédents font donc partie d'une étape d'apprentissage, qui permet de déterminer les paramètres de la modélisation thermique choisie pour le bâtiment. Ensuite, un procédé d'estimation de la future consommation énergétique du bâtiment peut être mis en oeuvre, afin de pouvoir assurer le confort thermique de ses occupants dans le futur. En complément, ce calcul permet aussi de prévoir les besoins de production énergétique sur un territoire donné pour une entité de production d'énergie, en tenant compte de tous les bâtiments présents sur ce territoire.

Pour définir leur souhait de confort, les occupants du bâtiment définissent un profil de température intérieure souhaitée dans le futur. Un système de régulation de température, interne au bâtiment, calcule le besoin énergétique à tout instant, plus précisément détermine le fonctionnement des différents appareils de chauffage ou climatisation internes afin de pouvoir atteindre la température de consigne à tout instant.

Pour cela, l'équation (6) mentionnée précédemment, pour laquelle tous les paramètres sont maintenant connus, est de nouveau exploitée, pour en déduire la consommation énergétique interne au bâtiment à tout instant par:

$$P_c(t) = C.\frac{dT_{int}}{dt} - GV(T_{ext}(t) - T_{int}(t)) - P_i(t) - \sum_{i=1}^{5} A_{req,i}.G_i(t)$$

où $T_{int}(t)$ est la consigne de température intérieure désirée, $T_{ext}(t)$ est la température extérieure calculée à partir des prévisions météorologiques, $G_i(t)$ est l'irradiance calculée à partir des prévisions météorologiques et des calculs géométriques incluant la position du soleil dans le ciel. En remarque, lorsque ce calcul est réalisé en temps quasi-réel ou pour des prévisions à très court terme, et non pour du moyen ou long terme, il n'est pas obligatoire d'avoir recours aux données météorologiques, qui peuvent être remplacées par des simples données mesurées.

L'invention porte aussi sur un système de prévision des besoins énergétiques d'un bâtiment, comprenant un calculateur permettant de mettre en oeuvre le procédé décrit précédemment. Ce système est avantageusement relié aux dispositifs de chauffage et climatisation d'un bâtiment pour mettre en oeuvre sa régulation thermique, sur la base du profil de consommation énergétique calculé pour atteindre un confort souhaité par ses occupants. Ce système comprend par exemple une unité de contrôle comprenant le calculateur qui met en oeuvre le procédé décrit précédemment. Ce procédé peut être mis en oeuvre par des moyens logiciels stockés sur un support informatique.

Enfin, un bâtiment peut être équipé d'un système de prévision de la consommation énergétique d'un bâtiment mettant en oeuvre le procédé décrit précédemment pour la régulation ou plus largement la gestion de ses dispositifs de chauffage et/ou climatisation.

Ainsi, la solution retenue répond bien aux objets de l'invention et présente les avantages suivants :

- Elle permet de maîtriser la consommation énergétique et d'atteindre une meilleure régulation thermique d'un bâtiment, avec des calculs suffisamment simples mais prenant en compte les phénomènes thermiques les plus importants ;
- Elle permet d'atteindre une grande précision par la définition de paramètres thermiques propres à chaque bâtiment, lors d'une phase d'apprentissage.

Finalement, la solution décrite représente un compromis avantageux entre les deux solutions de l'état de la technique mentionnées précédemment, puisqu'elle combine une modélisation physique astucieuse d'un bâtiment avec la connaissance de mesures passées.

Le mode de réalisation a été décrit en tenant compte des apports solaires passifs. En variante, les apports solaires passifs peuvent être modélisés par une autre approche que celle décrite. De plus, selon une autre variante, la convection et/ou la conduction thermique pourraient aussi être pris en compte, par exemple pour tenir compte de l'effet du vent, particulièrement si le bâtiment se trouve dans une région ventée. Le même principe d'apprentissage permet alors de définir les paramètres du modèle représentant ces phénomènes physiques.

## Revendications

1. Procédé de prévision de la consommation énergétique d'un bâtiment, mis en oeuvre par un calculateur et utilisant un modèle physique prenant en compte le chauffage et refroidissement ($P_c$) du bâtiment par un dispositif de chauffage et/ou climatisation, les apports solaires passifs ($P_{asp}$), les apports par les gains internes ($P_i$) comme le chauffage par les personnes et les appareils ménagers, et les pertes thermiques (Pertes_thermiques) de type convection et/ou conduction thermique entre le bâtiment et l'environnement extérieur, **caractérisé en ce qu'**il comprend une étape d'apprentissage pour en déduire la valeur des paramètres du modèle physique à partir de mesures effectuées au niveau du bâtiment dans le passé, comprenant :

    - la détermination d'au moins un paramètre du modèle physique relatif aux gains internes et/ou aux pertes thermiques à partir de mesures du passé lors de périodes de faibles ensoleillements ;
    - la détermination d'au moins un paramètre du modèle physique relatif aux apports solaires passifs à partir de mesures du passé lors de périodes ensoleillées.

2. Procédé de prévision de la consommation énergétique d'un bâtiment selon la revendication précédente, **caractérisé en ce que** l'étape d'apprentissage comprend les étapes suivantes :

    - détermination d'au moins un paramètre du modèle physique relatif aux pertes thermiques à partir de mesures du passé lors de périodes de faibles ensoleillements et de faible occupation du bâtiment ; et/ou
    - détermination d'au moins un paramètre du modèle physique relatif aux gains internes à partir de mesures du passé lors de périodes de faibles ensoleillements et d'occupation du bâtiment.

3. Procédé de prévision de la consommation énergétique d'un bâtiment selon l'une des revendications précédentes, **caractérisé en ce qu'**il comprend une étape d'utilisation du modèle physique après l'étape d'apprentissage pour calculer la consommation énergétique future pour le chauffage ou le refroidissement d'un bâtiment en fonction d'une température de consigne $T_{int}(t)$.

4. Procédé de prévision de la consommation énergétique d'un bâtiment selon l'une des revendications précédentes, **caractérisé en ce que** l'énergie reçue par les apports solaires passifs par le bâtiment sur une période donnée est calculée par la formule suivante :

$$\int_{période} P_{asp} = \sum_{i=1 \grave{a} n} \int_{période} A_{req,i} \cdot G_i(t)$$

où $P_{asp}$ représente la puissance des apports solaires passifs, $A_{req,i}$ représente l'aire réceptrice équivalente de la surface i des n surfaces du bâtiment, $G_i(t)$ représente l'irradiance (en $W.m^{-2}$) reçue par la surface i à l'instant t, calculée à partir de données météorologiques ou de mesures et d'un calcul géométrique prenant en compte la position du soleil dans le ciel,

et **caractérisé en ce que** l'étape d'apprentissage comprend le calcul des différentes valeurs $A_{req,i}$ en considérant des mesures effectuées au niveau du bâtiment dans le passé lors de périodes ensoleillées.

5. Procédé de prévision de la consommation énergétique d'un bâtiment selon la revendication précédente, **caractérisé en ce que** le modèle physique considère n compris entre 1 et 10 pour le calcul de l'énergie reçue par les apports solaires passifs.

6. Procédé de prévision de la consommation énergétique d'un bâtiment selon l'une des revendications précédentes, **caractérisé en ce que** le modèle physique calcule le bilan énergétique du bâtiment sur une période donnée par l'équation suivante :

$$\int_{période} P_C + \int_{période} P_{asp} + \int_{période} P_i = \int_{période} (PT + PV)$$

où:

$P_c$ est la puissance nécessaire pour le chauffage ou refroidissement du bâtiment,
PT représente la puissance perdue par les phénomènes de transmission vers l'extérieur,
PV représente la puissance perdue par la ventilation,
$P_{asp}$ représente la puissance apportée par les apports solaires passifs,
$P_i$ représente la puissance apportée par les gains internes, comme le chauffage par les personnes et les appareils ménagers.

7. Procédé de prévision de la consommation énergétique d'un bâtiment selon la revendication précédente, **caractérisé en ce qu'**il comprend une étape consistant à considérer que sur la période choisie, l'énergie thermique du bâtiment liée à l'inertie thermique est nulle, soit $\int S = 0$.

8. Procédé de prévision de la consommation énergétique d'un bâtiment selon la revendication 6 ou 7, **caractérisé en ce que** les pertes thermiques sur une période donnée du bâtiment sont calculées par les équations suivantes :

$$\int_{période} Pertes\_thermiques = \int_{période} PT + PV$$

$$\int_{période} Pertes\_thermiques = \int_{période} GV.(T_{int} - T_{ext}) = GV \int_{période} .(T_{int} - T_{ext})$$

où GV représente un coefficient de déperdition thermique (en W/°C), $T_{int}$ la température intérieure du bâtiment et $T_{ext}$ la température extérieure au bâtiment.

9. Procédé de prévision de la consommation énergétique d'un bâtiment selon l'une des revendications 6 à 8, **caractérisé en ce que** les gains internes sont considérés comme égaux à une constante sur une période donnée, qui est une valeur moyenne de la période donnée, prenant en compte l'occupation et/ou l'activité au sein du bâtiment.

10. Procédé de prévision de la consommation énergétique d'un bâtiment selon l'une des revendications 8 ou 9, **caractérisé en ce que** l'étape d'apprentissage comprend une première sous-étape de détermination des paramètres GV et $\int_{période} Pi$ en considérant des mesures effectuées au niveau du bâtiment dans le passé lors de périodes de faible ensoleillement et d'apports solaires passifs négligeables.

11. Procédé de prévision de la consommation énergétique d'un bâtiment selon l'une des revendications précédentes, **caractérisé en ce que** les fluctuations de température au sein d'un bâtiment sont prises en compte par l'équation suivante :

$$C.\frac{dT_{int}}{dt} = GV(T_{ext}(t) - T_{int}(t)) + P_c(t) + P_i(t) + \sum_{i=1}^{5} A_{req,i}.G_i(t)$$

où C représente la capacité thermique du bâtiment qui peut être estimée lors de l'étape d'apprentissage.

12. Procédé de prévision de la consommation énergétique d'un bâtiment selon la revendication précédente, **caractérisé en ce que** l'étape d'apprentissage comprend une sous-étape de calcul d'une valeur de C(t) à un instant donné à partir de mesures effectuées au niveau du bâtiment dans le passé lors d'une période non ensoleillée par la formule suivante :

$$\hat{C}(t) = \frac{GV(T_{ext}(t) - T_{int}(t)) + P_c(t) + \int_{période} Pi \, / \, période}{\frac{dT_{int}}{dt}}$$

et **en ce que** C est finalement calculé par la moyenne des valeurs C(t) sur la période donnée : C = moyenne$_{journée}(\hat{C}(t))$.

13. Procédé de prévision de la consommation énergétique d'un bâtiment selon la revendication précédente, **caractérisé en ce qu'**il calcule la consommation énergétique future pour le chauffage ou le refroidissement d'un bâtiment en fonction d'une température de consigne $T_{int}(t)$ par l'équation suivante :

$$P_c(t) = C.\frac{dT_{int}}{dt} - GV(T_{ext}(t) - T_{int}(t)) - P_i(t) - \sum_{i=1}^{5} A_{req,i}.G_i(t)$$

où $T_{ext}(t)$ est la température extérieure calculée à partir des prévisions météorologiques ou à partir de mesures, $G_i(t)$ représente l'irradiance (en $W.m^{-2}$) reçue par la surface i à l'instant t calculée à partir des prévisions météorologiques ou à partir de mesures et à partir de calculs géométriques incluant la position du soleil dans le ciel.

14. Support informatique comprenant un programme informatique mettant en oeuvre les étapes du procédé de prévision de la consommation énergétique d'un bâtiment selon l'une des revendications précédentes.

15. Système de prévision de la consommation énergétique d'un bâtiment, **caractérisé en ce qu'**il comprend une unité de contrôle qui met en oeuvre le procédé de prévision de la consommation énergétique du bâtiment selon l'une des revendications 1 à 13.

16. Système de prévision de la consommation énergétique d'un bâtiment selon la revendication précédente, **caractérisé en ce qu'**il comprend un dispositif de chauffage et/ou climatisation et **en ce que** l'unité de contrôle met en oeuvre la régulation de la température intérieure du bâtiment en actionnant le dispositif de chauffage et/ou climatisation, en fonction d'une température de consigne souhaitée.

17. Bâtiment **caractérisé en ce qu'**il comprend un système de prévision de la consommation énergétique d'un bâtiment mettant en oeuvre le procédé de prévision de la consommation énergétique d'un bâtiment selon l'une des revendications 1 à 13.

**Patentansprüche**

1.  Verfahren zur Vorhersage des Energieverbrauchs eines Gebäudes, das von einem Rechner eingesetzt wird und ein physikalisches Modell verwendet, das das Heizen und Kühlen ($P_c$) des Gebäudes durch eine Heiz- und/oder Klimaanlage, die Erwärmung durch passive Sonneneinstrahlung ($P_{asp}$), die Erwärmung durch interne Temperaturerhöhung ($P_i$), wie die Erwärmung durch die Personen und die Haushaltsgeräte, und die Wärmeverluste (thermische_Verluste) vom Typ Konvektion und/oder Wärmeleitung zwischen dem Gebäude und der äußeren Umgebung berücksichtigt, **dadurch gekennzeichnet, dass** es einen Schritt des Lernens umfasst, um dadurch den Wert der Parameter des physikalischen Modells aus Messungen abzuleiten, die im Bereich des Gebäudes in der Vergangenheit durchgeführt wurden, umfassend:

    - die Bestimmung mindestens eines Parameters des physikalischen Modells in Zusammenhang mit den internen Temperaturerhöhungen und/oder Wärmeverlusten aus Messungen der Vergangenheit zu Zeiten geringer Sonneneinstrahlung;
    - die Bestimmung mindestens eines Parameters des physikalischen Modells in Zusammenhang mit der Erwärmung durch passive Sonneneinstrahlung aus Messungen der Vergangenheit zu Zeiten mit Sonneneinstrahlung.

2.  Verfahren zur Vorhersage des Energieverbrauchs eines Gebäudes nach dem vorhergehenden Anspruch, **dadurch gekennzeichnet, dass** der Schritt des Lernens die folgenden Schritte umfasst:

    - Bestimmung mindestens eines Parameters des physikalischen Modells in Zusammenhang mit den Wärmeverlusten aus Messungen der Vergangenheit zu Zeiten geringer Sonneneinstrahlung und geringer Belegung des Gebäudes; und/oder
    - Bestimmung mindestens eines Parameters des physikalischen Modells in Zusammenhang mit den internen Temperaturerhöhungen aus Messungen der Vergangenheit zu Zeiten geringer Sonneneinstrahlung und Belegung des Gebäudes.

3.  Verfahren zur Vorhersage des Energieverbrauchs eines Gebäudes nach einem der vorhergehenden Ansprüche, **dadurch gekennzeichnet, dass** es einen Schritt der Verwendung des physikalischen Modells nach dem Schritt des Lernens umfasst, um den zukünftigen Energieverbrauch für das Heizen oder Kühlen eines Gebäudes in Abhängigkeit von einer Solltemperatur $T_{int}(t)$ zu berechnen.

4.  Verfahren zur Vorhersage des Energieverbrauchs eines Gebäudes nach einem der vorhergehenden Ansprüche, **dadurch gekennzeichnet, dass** die von dem Gebäude durch die Erwärmung durch passive Sonneneinstrahlung über einen gegebenen Zeitraum erhaltene Energie nach folgender Formel berechnet wird:

$$\int_{Periode} P_{asp} = \sum_{i=1 \, Jahr} \int_{Periode} A_{req.i} \cdot G_i(t)$$

    wobei $P_{asp}$ die Leistung der Erwärmung durch passive Sonneneinstrahlung darstellt, $A_{req.i}$ den äquivalenten Aufnahmebereich der Fläche i der n Flächen des Gebäudes darstellt, $G_i(t)$ die von der Fläche i zum Zeitpunkt t empfangene Strahlung (in $W.m^{-2}$) darstellt, berechnet aus meteorologischen Daten oder Messungen und einer geometrischen Berechnung, die die Position der Sonne am Himmel berücksichtigt, und **dadurch gekennzeichnet, dass** der Schritt des Lernens die Berechnung der verschiedenen Werte $A_{req.i}$ unter Berücksichtigung von Messungen, die im Bereich des Gebäudes in der Vergangenheit zu Zeiten mit Sonneneinstrahlung durchgeführt wurden, umfasst.

5.  Verfahren zur Vorhersage des Energieverbrauchs eines Gebäudes nach dem vorhergehenden Anspruch, **dadurch gekennzeichnet, dass** das physikalische Modell n zwischen 1 und 10 für die Berechnung der durch die Erwärmung durch passive Sonneneinstrahlung empfangenen Energie heranzieht.

6.  Verfahren zur Vorhersage des Energieverbrauchs eines Gebäudes nach einem der vorhergehenden Ansprüche, **dadurch gekennzeichnet, dass** das physikalische Modell die Energiebilanz des Gebäudes über einen gegebenen Zeitraum durch die folgende Gleichung berechnet:

$$\int_{Periode} P_C + \int_{Periode} P_{asp} + \int_{Periode} P_i = \int_{Periode} (PT + PV)$$

wobei:

P$_C$ die für das Heizen oder Kühlen des Gebäudes notwendige Leistung ist,
PT die durch die Phänomene der Übertragung nach außen verlorene Leistung darstellt,
PV die durch die Belüftung verlorene Leistung darstellt,
P$_{asp}$ die durch die Erwärmung durch passive Sonneneinstrahlung zugeführte Leistung darstellt,
P$_i$ die durch die internen Temperaturerhöhungen, wie die Erwärmung durch die Personen und die Haushaltsgeräte, zugeführte Leistung darstellt.

7. Verfahren zur Vorhersage des Energieverbrauchs eines Gebäudes nach dem vorhergehenden Anspruch, **dadurch gekennzeichnet, dass** es einen Schritt umfasst, der darin besteht, anzunehmen, dass über den gewählten Zeitraum die Wärmeenergie des Gebäudes, die mit der thermischen Trägheit verbunden ist, gleich null ist, d.h. $\int S=0$.

8. Verfahren zur Vorhersage des Energieverbrauchs eines Gebäudes nach Anspruch 6 oder 7, **dadurch gekennzeichnet, dass** die Wärmeverluste des Gebäudes über einen gegebenen Zeitraum durch die folgenden Gleichungen berechnet werden:

$$\int_{Periode} thermische\_Verluste = \int_{Periode} PT + PV$$

$$\int_{Periode} thermische\_Verluste = \int_{Periode} GV.(T_{int} - T_{ext}) = GV \int_{Periode} .(T_{int} - T_{ext})$$

wobei GV einen Wärmeverlustkoeffizienten (in W/°C) darstellt, $T_{int}$ die Innentemperatur des Gebäudes und $T_{ext}$ die Außentemperatur außerhalb des Gebäudes darstellt.

9. Verfahren zur Vorhersage des Energieverbrauchs eines Gebäudes nach einem der Ansprüche 6 bis 8, **dadurch gekennzeichnet, dass** die internen Temperaturerhöhungen als gleich einer Konstante über einen gegebenen Zeitraum angenommen werden, die ein Durchschnittswert des gegebenen Zeitraums ist, wobei die Belegung und/oder die Aktivität im Inneren des Gebäudes berücksichtigt werden.

10. Verfahren zur Vorhersage des Energieverbrauchs eines Gebäudes nach einem der Ansprüche 8 oder 9, **dadurch gekennzeichnet, dass** der Schritt des Lernens einen ersten Unterschritt der Bestimmung der Parameter GV und $\int_{Periode} Pi$ umfasst, wobei Messungen berücksichtigt werden, die im Bereich des Gebäudes in der Vergangenheit zu Zeiten geringer Sonneneinstrahlung und vernachlässigbarer Erwärmung durch passive Sonneneinstrahlung durchgeführt wurden.

11. Verfahren zur Vorhersage des Energieverbrauchs eines Gebäudes nach einem der vorhergehenden Ansprüche, **dadurch gekennzeichnet, dass** die Temperaturschwankungen im Inneren eines Gebäudes durch die folgende Gleichung berücksichtigt werden:

$$C.\frac{dT_{int}}{dt} = GV(T_{ext}(t) - T_{int}(t)) + P_c(t) + P_i(t) + \sum_{i=1}^{5} A_{req,i}.G_i(t)$$

wobei C die Wärmekapazität des Gebäudes darstellt, die während des Lernschrittes geschätzt werden kann.

12. Verfahren zur Vorhersage des Energieverbrauchs eines Gebäudes nach dem vorhergehenden Anspruch, **dadurch gekennzeichnet, dass** der Lernschritt einen Unterschritt der Berechnung eines Wertes von C(t) zu einem gegebenen Zeitpunkt aus Messungen, die im Bereich des Gebäudes in der Vergangenheit zu einem Zeitraum ohne Sonneneinstrahlung durchgeführt wurden, durch die folgende Formel umfasst:

$$\hat{C}(t) = \frac{GV(T_{ext}(t) - T_{int}(t)) + P_c(t) + \int_{Periode} Pi \,/\, Periode}{\frac{dT_{int}}{dt}}$$

und dass C schließlich durch den Durchschnitt der Werte C(t) über den gegebenen Zeitraum berechnet wird: C = Durchschnitt$_{Tag}(\hat{C}(t))$.

13. Verfahren zur Vorhersage des Energieverbrauchs eines Gebäudes nach dem vorhergehenden Anspruch, **dadurch gekennzeichnet, dass** es den zukünftigen Energieverbrauch zum Heizen oder Kühlen eines Gebäudes in Abhän- gigkeit von einer Solltemperatur $T_{int}(t)$ durch die folgende Gleichung berechnet:

$$P_c(t) = C.\frac{dT_{int}}{dt} - GV(T_{ext}(t) - T_{int}(t)) - P_i(t) - \sum_{i=1}^{5} A_{req,i}.G_i(t)$$

wobei $T_{ext}(t)$ die Außentemperatur ist, die aus den meteorologischen Vorhersagen oder aus Messungen berechnet wird, $G_i(t)$ die Bestrahlung (in $W.m^{-2}$) darstellt, die von der Fläche i zum Zeitpunkt t empfangen wird, berechnet aus den meteorologischen Vorhersagen oder aus Messungen und aus geometrischen Berechnungen, die Position der Sonne am Himmel einschließend.

14. Informatikträger, umfassend ein Informatikprogramm, das die Schritte des Verfahrens zur Vorhersage des Energieverbrauchs eines Gebäudes nach einem der vorhergehenden Ansprüche einsetzt.

15. System zur Vorhersage des Energieverbrauchs eines Gebäudes, **dadurch gekennzeichnet, dass** es eine Kontrolleinheit umfasst, die das Verfahren zur Vorhersage des Energieverbrauchs des Gebäudes nach einem der Ansprüche 1 bis 13 einsetzt.

16. System zur Vorhersage des Energieverbrauchs eines Gebäudes nach dem vorhergehenden Anspruch, **dadurch gekennzeichnet, dass** es eine Heiz- und/oder Klimaanlage umfasst, und dass die Kontrolleinheit die Regelung der Innentemperatur des Gebäudes durch Betätigung der Heiz- und/oder Klimaanlage in Abhängigkeit von einer gewünschten Solltemperatur einsetzt.

17. Gebäude, **dadurch gekennzeichnet, dass** es ein System zur Vorhersage des Energieverbrauchs eines Gebäudes umfasst, das das Verfahren zur Vorhersage des Energieverbrauchs eines Gebäudes nach einem der Ansprüche 1 bis 13 einsetzt.

**Claims**

1. Method for forecasting the energy consumption of a building, implemented by a computer and using a physical model taking into account the heating and cooling ($P_c$) of the building by a heating and/or air-conditioning device, the passive solar inputs ($P_{asp}$), the inputs by internal gains ($P_i$) such as the heating by people and household appliances, and the heat losses (heat_losses) of heat convection and/or conduction type between the building and the outside environment, **characterized in that** it comprises a learning step to deduce therefrom the value of the parameters of the physical model based on measurements performed on the building in the past, comprising:

   - the determination of at least one parameter of the physical model relating to the internal gains and/or to the heat losses based on past measurements during periods of weak sunlight;
   - the determination of at least one parameter of the physical model relating to the passive solar inputs based on past measurements during sunny periods.

2. Method for forecasting the energy consumption of a building according to the preceding claim, **characterized in that** the learning step comprises the following steps:

   - determination of at least one parameter of the physical model relating to the heat losses based on past measurements during periods of weak sunlight and of low building occupancy; and/or
   - determination of at least one parameter of the physical model relating to the internal gains based on past measurements during periods of weak sunlight and of occupancy of the building.

3. Method for forecasting the energy consumption of a building according to one of the preceding claims, **characterized in that** it comprises a step of use of the physical model after the learning step to compute the future energy consumption for the heating or for the cooling of a building as a function of a setpoint temperature $T_{int}(t)$.

4. Method for forecasting the energy consumption of a building according to one of the preceding claims, **characterized in that** the energy received by the passive solar inputs by the building over a given period is computed by the following formula:

$$\int_{period} P_{asp} = \sum_{i=1 \, to \, n} \int_{period} A_{req,i}.G_i(t)$$

in which $P_{asp}$ represents the power of the passive solar inputs, $A_{req,i}$ represents the equivalent receiving area of the surface i of the n surfaces of the building, $G_i(t)$ represents the irradiance (in $W.m^{-2}$) received by the surface i at the instant t, computed on the basis of meteorological data or of measurements and of a geometrical computation taking into account the position of the sun in the sky,
and **characterized in that** the learning step comprises the computation of the different values $A_{req,i}$ by considering the measurements performed on the building in the past during sunny periods.

5. Method for forecasting the energy consumption of a building according to the preceding claim, **characterized in that** the physical model considers n to be between 1 and 10 for the computation of the energy received by the passive solar inputs.

6. Method for forecasting the energy consumption of a building according to one of the preceding claims, **characterized in that** the physical model computes the energy balance of the building over a given period by the following equation:

$$\int_{period} Pc + \int_{period} P_{asp} + \int_{period} P_i = \int_{period} (PT + PV)$$

in which :

   $P_c$ is the power needed to heat or cool the building,

PT represents the power lost through outward transmission phenomena,

PV represents the power lost through ventilation,

$P_{asp}$ represents the power added by the passive solar inputs,

$P_i$ represents the power added by the internal gains, such as the heating by people and household appliances.

7. Method for forecasting the energy consumption of a building according to the preceding claim, **characterized in that** it comprises a step consisting in considering that, over the chosen period, the heat energy of the building linked to the heat inertia is zero, i.e. $\int S = 0$.

8. Method for forecasting the energy consumption of a building according to Claim 6 or 7, **characterized in that** the heat losses over a given period of the building are computed by the following equations:

$$\int_{period} Heat\_losses = \int_{period} PT + PV$$

$$\int_{period} Heat\_losses = \int_{period} GV.(T_{int} - T_{ext}) = GV \int_{period} .(T_{int} - T_{ext})$$

in which GV represents a heat loss coefficient (in W/°C), $T_{int}$ the internal temperature of the building and $T_{ext}$ the temperature outside the building.

9. Method for forecasting the energy consumption of a building according to one of Claims 6 to 8, **characterized in that** the internal gains are considered to be equal to a constant over a given period, which is an average value of the given period, taking into account the occupancy and/or activity within the building.

10. Method for forecasting the energy consumption of a building according to one of Claims 8 or 9, **characterized in that** the learning step comprises a first substep for determining the parameters GV and $\int_{period} Pi$ by considering measurements performed on the building in the past during periods of weak sunlight and negligible passive solar inputs.

11. Method for forecasting the energy consumption of a building according to one of the preceding claims, **characterized in that** the temperature fluctuations within a building are taken into account by the following equation:

$$C.\frac{dT_{int}}{dt} = GV(T_{ext}(t) - T_{int}(t)) + P_c(t) + P_i(t) + \sum_{i=1}^{5} A_{req,i}.G_i(t)$$

in which C represents the heat capacity of the building which can be estimated during the learning step.

12. Method for forecasting the energy consumption of a building according to the preceding claim, **characterized in that** the learning step comprises a substep of computing a value of $\hat{C}(t)$ at a given instant based on measurements performed on the building in the past during a period without sunlight by the following formula:

$$\hat{C}(t) = \frac{GV(T_{ext}(t) - T_{int}(t)) + P_c(t) + \int_{period} Pi / period}{\frac{dT_{int}}{dt}}$$

and **in that** C is finally computed by the average of values C(t) over the given period: **C = average$_{day}$($\hat{C}$(t)).**

13. Method for forecasting the energy consumption of a building according to the preceding claim, **characterized in that** it computes the future energy consumption for the heating or the cooling of a building as a function of a setpoint temperature $T_{int}(t)$ by the following equation:

$$P_c(t) = C.\frac{dT_{int}}{dt} - GV\big(T_{ext}(t) - T_{int}(t)\big) - P_i(t) - \sum_{i=1}^{5} A_{req,i}.G_i(t)$$

in which $T_{ext}(t)$ is the outside temperature computed on the basis of the weather forecasts or on the basis of measurements, $G_i(t)$ represents the irradiance (in $W.m^{-2}$) received by the surface i at the instant t computed on the basis of the weather forecasts or on the basis of measurements and on the basis of geometrical computations including the position of the sun in the sky.

14. Computer medium comprising a computer program implementing the steps of the method for forecasting the energy consumption of a building according to one of the preceding claims.

15. System for forecasting the energy consumption of a building, **characterized in that** it comprises a control unit which implements the method for forecasting the energy consumption of the building according to one of Claims 1 to 13.

16. System for forecasting the energy consumption of a building according to the preceding claim, **characterized in that** it comprises a heating and/or air-conditioning device and **in that** the control unit implements the regulation of the internal temperature of the building by actuating the heating and/or air-conditioning device, as a function of a desired setpoint temperature.

17. Building, **characterized in that** it comprises a system for forecasting the energy consumption of a building implementing the method for forecasting the energy consumption of a building according to one of Claims 1 to 13.

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007061357 A